# EUROPEAN PATENT SPECIFICATION

(11) **EP 4 062 171 B1**
(45) Date of publication and mention of the grant of the patent: **27.12.2023**
(21) Application number: 20891255.0
(22) Date of filing: 31.01.2020
(51) Int. Cl.: G01N 31/22, G01N 21/78, C01B 15/023

(54) **A NOVEL REAGENT, CATAL'S REAGENT, AND KIT FOR USING IRON SULPHATE DETERMINATION BY COLORIMETRIC METHOD**
NEUARTIGES REAGENS, KATALS-REAGENS UND KIT ZUR VERWENDUNG VON EISENSULFATBESTIMMUNG DURCH KOLORIMETRISCHES VERFAHREN
NOUVEAU RÉACTIF, RÉACTIF DE CATALYSE ET KIT POUR L'UTILISATION DE LA DÉTERMINATION DE SULFATE DE FER PAR UN PROCÉDÉ COLORIMÉTRIQUE

(30) Priority: 18.11.2019 TR 201917962
(43) Date of publication of application: 28.09.2022
(73) Proprietor: T.C. Üsküdar Üniversitesi, Istanbul (TR); Istanbul Üniversitesi - Cerrahpasa Rektörlügü, 34320 Avcilar/Istanbul (TR); T.C. Istanbul Arel Üniversitesi, Sefaköy/Istanbul (TR)
(72) Inventor: ÇATAL, Tunç, Atasehir/ Istanbul (TR); ENISOGLU ATALAY, Vildan, Üsküdar/ Istanbul (TR); ÖZKÖK, Funda, Yerleskesi, Istanbul (TR); SAHIN, Yesim Müge, Büyükçekmece/ Istanbul (TR); ONUL, Nihal, Kampüsü, Istanbul (TR); ASGAROVA, Kamala, Kampüsü, Istanbul (TR)
(74) Representative: Sevinç, Cenk
(86) International application number: PCT/TR2020/050061
(87) International publication number: WO 2021/101470

(56) References cited:
- WO-A1-2015/179273
- WO-A1-2018/130476
- Ghosh Amrita; Jose D Amilan; Kaushik Rahul: "Anthraquinones as versatile colorimetric reagent for anions", Sensors and Actuators B: Chemical, vol. 229 , pages 545-560, XP029464545, DOI: http://dx.doi.org/10.1016/ j.snb. 2016.01.14 0

## Description

### TECHNICAL FIELD

The invention relates to a novel reagent called Catal's reagent, a method and kit for use in the determination of iron (II) sulphate in water systems, wastewater, biological materials, food products, soil samples and synthetic mixtures in the chemical, biochemistry, farming, agriculture and biotechnology industries.

### STATE OF ART

Anthraquinones are active organic compounds known for reactions in important research areas such as medical, drug delivery systems, analytical applications, textile industry, materials and tissue engineering. Said compounds are the subject of particular interest due to their biological activities, such as anti-cancer, anti-tumor anti-microbial, anti-fungal, anti-inflammatory (S.K. Agarwal, 2000; R.K.Goel, 1991; N, Abu 2013; E. M. Perchellet, 2000). Anthraquinone compounds are one of the first G-Quadruplex DNA ligands. DNA interaction can be used as a potential transcription factor since they indicate the binding and recognition of the synthesis of DNA binding sites (Hsin et al., 2008; Lown, 1993).

In the state of art applications, there are various studies for the detection of iron (II) salts. For example, starch substrate 10-phenanthrol can be used for colorimetric detection of iron (II) (Gu and Zhou 1996; Choodum et al., 2019). The computer analytical chemistry techniques can be used for the determination of iron concentration in pharmaceutical products (Solana-Altabella et al., 2018). For the determination of spectrophotometric iron (III) by using Bis thiosemicarbazone ligand, (2Z, 2'Z)-2,2'-((4S, 5R)-4,5,6-trihydroxyhexane-1,2-diyldene)bis(N-phenylhydrazinecarbotioamide) chemometric methods are available (Rohani Moghadam et al., 2016). Iron (III) in iron (II) samples can be measured spectrophotometrically by using quercetin and morine (Balcerzak et al., 2008). In human serum (Carter 1971), bathophenanthroline and triazine are used for colorimetric measurement of iron (II) in fresh water (Peter et al., 1956; Stookey 1970; Vershoor and Molot, 2013). Iron (II) can be oxidized with ceric ammonium sulphate producing ferric thiocyanide colour complex, which is a useful reaction for the determination spectrophotometric iron (II) (Goswami and Kalita, 1988). A flow injection solid phase spectrophotometry is used for the detection of iron by the principle of interaction between iron (II) and 1-(2-thiazolylazo)-2-naphthol (Teixeira and Rocha, 2007). It has been reported that solid phase spectrophotometry can be used to detect 2,3-dichloro-6- (3-carboxy-2-hydroxy-1-naphthylazo) quinoxaline and iron (II) (Amin and Gouda, 2008). Determining iron in fuels such as bioethanol was performed by using the principle of colorimetric reaction between iron (III) and thiocyanide (Joao et al., 2019).

There is still a need for providing new reagents for the determination of iron (II) salts, in particular at higher concentrations. This requires an improvement and innovation in the technical field.

### BRIEF DESCRIPTION OF THE INVENTION

The present invention relates to a reagent and kit for use in the determination of iron (II) sulfate, which meets the requirements mentioned above, eliminates all disadvantages and brings some additional advantages.

The main aim of the invention is to obtain a sensitive, having high specificity and a wide range of concentration detection reagents and related kits that can be synthesized without requiring the use of hazardous chemicals in acid character. Further, it is possible to develop the concentration detection range of the reagent of the invention with the method modification.

Another aim of the invention is to develop a novel reagent and kit towards commercial use field for the colorimetric detection and quantitative analysis of dissolved iron (II) sulfate or iron (II) sulfate in solid form in various examples. When the solutions described by the invention are mixed in certain order and at certain concentrations, the iron (II) sulfate changes the color by rapidly reacts quantitatively and the color change can be analyzed in spectrophotometer against the blind. Further, it can be detected by color change in fabrics, surfaces or other materials that are qualitatively saturated with iron (II) or including iron (II) sulphate in undissolved form.

Another aim of the invention; without requiring the use of any method of detection, diluted or concentrated acid treatment, is to develop a novel non-corrosive reagent and related kit in order to easily, rapidly and safely determine iron (II) sulphate in a large concentration.

Another aim of the invention is to provide qualitative and quantitative determination of iron (II) sulfate with a new reagent called Catal's Reagent, comprising 1- (Dodecylthio)anthracene-9,10-dione.

The structural and characteristic features and all advantages of the invention will become apparent from the following detailed description and drawings. Therefore, the evaluation should be made by taking into consideration the detailed description and figures.

### BRIEF DESCRIPTION OF DRAWINGS

Figure 1 gives the chemical structure of 1- (Dodecylthio) anthracene-9,10-dione molecule.
Figure 2 gives maximum absorbance values of thio anthraquinone molecule in acetonitrile solvent in wavelength range of 185 nm - 700 nm in UV-visible spectrophotometer (A), maximum absorbance value of the reaction mixture formed after triple solution in the wavelength range of 185 nm - 700 nm (B).
Figure 3 gives the absorbance of iron (II) sulphate heptahydrate in 1 - 10 mg mL⁻¹ (A) ve 0,2 - 1 mg mL⁻¹ (B) concentrations.
Figure 4 gives iron (II) sulphate - absorbance values of color change relation to Catal reaction at 304 nm depending on time.
Figure 5 gives the synthesis reaction of 1- (Dodecylthio) anthracene-9,10-dione molecule.

Table 1 gives the chemical parameters calculated by the B3LYP / 6-311 + G (d, p) method in various phases. (ΔE: Energy stability, χ: electronegativity, EA: electron affinity, n: hardness, S: softness, ω: electrophilicity index, EHOMO: Highest Full Molecular Orbital Energy, ELUMO: Lowest Full Molecular Orbital energy)

### DETAILED DESCRIPTION OF THE INVENTION

In this detailed description, preferred embodiments of the invention are described with respect to a better understanding of the subject matter such that it will not form any limiting effect.

The invention relates to a novel reagent and kit for use in the determination of iron (II) sulfate. Said reagent comprises a thioanthraquinone molecule and is referred to as Catal's reagent.

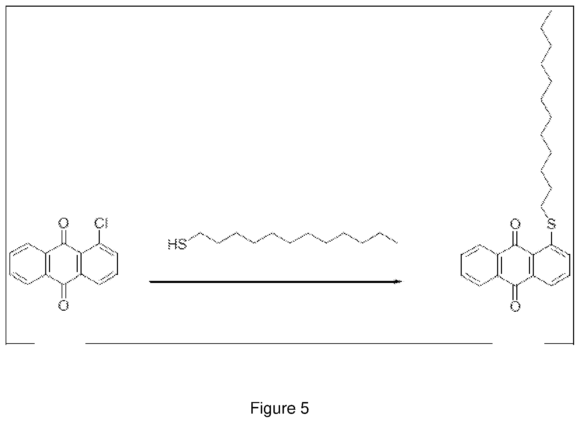

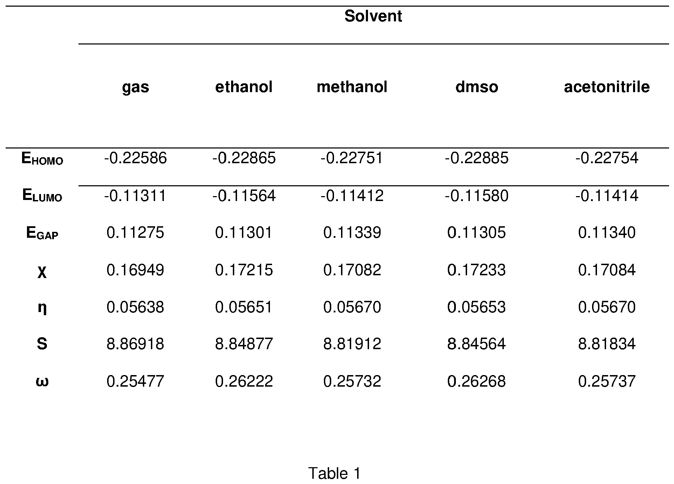

In the method of synthesizing said thioanthraquinone molecule, the method described in patent application No TR 2016/19610 is used. Accordingly, first, 1 gram of 1-Chloro anthraquinone and preferably 25 mL of ethylene glycol are mixed in a reaction flask. Then, 0.83 grams of 1-Dodecanethiolare preferably added to the reaction flask and a yellowish reaction mixture is obtained. 10 ml of aqueous potassium hydroxide solution is preferably added to this mixture and the reaction temperature is increased to 110°C to 1 20°C. Preferably, after 48 hours of reflux, a yellow thio anthraquinone molecule (1- (Dodecylthio) anthracene-9,10-dione) is obtained. Figure 5 gives the synthesis reaction of 1-(Dodecylthio)anthracene-9,10-dione. The obtained thio anthraquinone (1-(Dodecylthio) anthracene-9,10-dione) is preferably extracted with 30 mL of chloroform. The organic phase is washed with water and dried with sodium sulfate. The synthesized thio anthraquinone molecule (1-(Dodecylthio)anthracene-9,10-dione) is purified with the column chromatography. The chemical structure of the thio anthraquinone molecule 1-(Dodecylthio)anthracene-9,10-dione is characterized by spectroscopic methods (FT-IR, NMR, MS, UV).

The synthesized 1-(Dodecylthio)anthracene-9,10-dione is mixed by adding an organic solvent (preferably acetonitrile). At this stage, a solution is obtained by diluting hydrogen peroxide with distilled water. The solution of iron (II) sulfate in distilled water is also prepared. In the subsequent process step, the solution formed by adding organic solvent to 1-(Dodecylthio)anthracene-9,10-dione molecule is mixed with the solution of iron (II) sulfate in distilled water.

The solution diluted with hydrogen peroxide distilled water is added to the solution formed by adding organic solvent to 1-(Dodecylthio)anthracene-9,10-dione molecule and the new solution obtained by mixing the solution of iron (II) sulphate in distilled water. Therefore, three separate solutions are mixed together. Preferably, 30 mM trisodium citrate dihydrate solution is added to said triple solution. Within the scope of the invention, it is also possible to use other stabilizers instead of trisodium citrate dihydrate. The absorbance of the obtained solution is measured at 304 nM.

The solution obtained by adding an organic solvent to 1-(Dodecylthio) anthracene-9,10-dione molecule can be applied directly to fabrics, solids and surfaces containing iron (II) sulfate and the surface treated with this solution can be indicated as the presence of iron (II) sulphate qualitatively by the addition of the solution obtained by diluting the hydrogen peroxide with distilled water. In quantitative measurement different concentration ranges and different wavelengths can be used for spectrophotometric or other colorimetric analysis.

The kit developed for the determination of iron (II) sulphate comprises:
- The solution obtained by adding organic solvent to 1- (Dodecylthio) anthracene-9,10-dione (Catal's reagent),
- the solution obtained by diluting the hydrogen peroxide with distilled water,
- trisodium citrate dihydrate or a solution of stabilizer feature,
- the solution of iron (II) sulphate in distilled water.

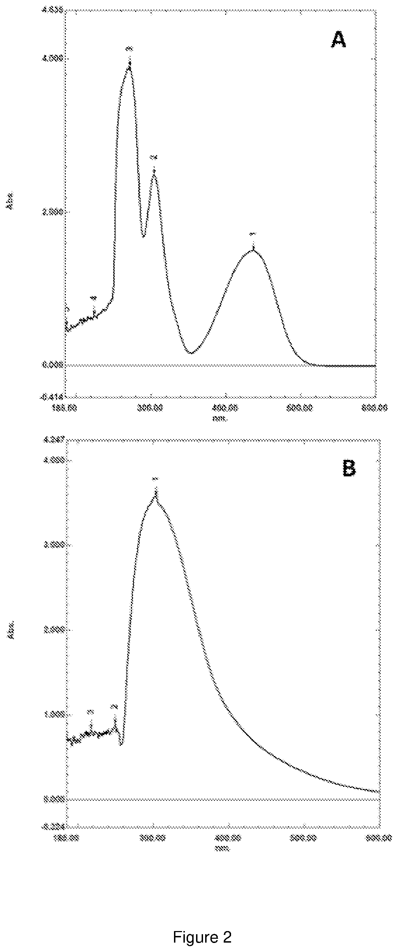

A reagent is obtained by dissolving the 1-(Dodecylthio)anthracene-9,10-dione molecule preferably in organic solvents. The reagent obtained is called Catal's reagent. Solvents such as ethanol, methanol and acetonitrile can be used as organic solvents in the invention. In the invention, preferably 20 mg of thio anthraquinone derivative (~ 0.816 mM) is dissolved in 60 mL of solvents, respectively and preferably, said Catal reagent is prepared by dissolving 20 mg of 1-(Dodecylthio)anthracene-9,10-dione in 60 mL of absolute acetonitrile (Merck, USA). Three peaks were observed in the wavelength range of 185 - 700 nm (Figure 2A). All mixtures prepared by mixing 1-(Dodecylthio)anthracene-9,10-dione with any solvent are referred as Catal's reagent. It is important that the anthraquinone molecule (1-(Dodecylthio)anthracene-9,10-dione) to be used in producing said Catal's Reagent is pure. For this purpose, in the invention, column chromatography is used according to the purification purposes.

In addition to acetonitrile, the reagent of the invention is also soluble in all organic solvents such as chloroform, dichloromethane, ethylacetate, ethanol and methanol and in dimethylsulfoxide (DMSO).

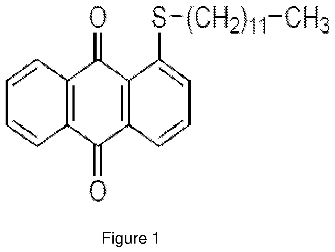

Figure 1 gives the chemical structure of the 1-(Dodecylthio)anthracene-9,10-dione molecule. The molecular weight of yellow, solid molecule is 408.6 g/mol and does not have toxic and carcinogenic feature. The chemical features of said molecule is given in Table 1.

1-Dodecanethiol molecule used in the synthesis reaction of 1-(Dodecylthio)anthracene-9,10-dione molecule is a compound from the thiol class. Thiols are biologically very active and their radical ion capturing capacity is known from the scientific studies (Devasagayam et al., 1991). 1-(Dodecylthio)anthracene-9,10-dione molecule synthesized with the synergy formed by both the anthraquinone skeleton and the thiol is a highly active compound.

In one embodiment of the invention, 17.5% H₂O₂ was prepared from a 35% stock solution of H₂O₂ by using distilled water (Merck KGaA, Kat. No. 1.08600.1000, Billerica, USA). Serial dilutions of iron (II) sulphate heptahydrate (VWR, Leuven, Belgium) were prepared by using 10 mg mL⁻¹ stock solution in distilled water and 1-2-3-4-5-6-7-8-9-10 mg mL⁻¹ concentrations were prepared by using distilled water. The concentration range was also analyzed at 0.2-1 mg mL⁻¹. 50 µL H₂O₂ çözeltisi (17.5%, v: v) was added to the mixture by adding 50 µL of Catal's reagent to preferably 100 µL of iron (II) sulphate solution. Preferably 9 mL of trisoduim citrat dihydrate 30 mM, VWR, Lot. No. 16D144103, Leuven, Belgium) was added to the reaction mixture. Absorbances were measured in a wavelength of 304 nM by using a UV-visible spectrophotometer (Shimadzu UV-2600, Cat. No. 206-27600-45, Kyoto, Japan). After the reaction, a single peak (Maximum absorbance, 304 nm) was obtained in the screening performed in a wavelength range of 185 - 700 nm. Figure 2B gives the maximum absorbance value of the reaction mixture formed after triple solution in the wavelength range of 185 nm to 700 nm.

This method can be used in all materials, mixtures, solutions containing iron (II) sulphate and Catal's reagent, hydrogen peroxide, trisodium citrate dihydrate and sample can be used in different mixing ratios based on the concentration range of iron (II) sulfate in the desired samples.

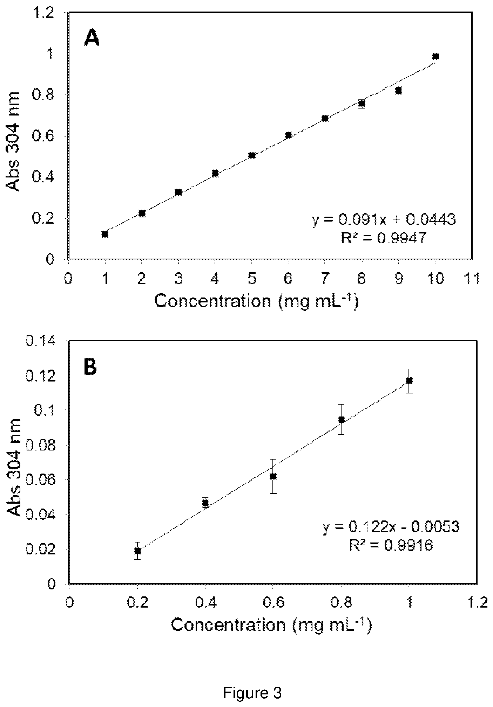

The absorbance values measured depending on the iron (II) sulfate concentration increased linearly and R² values were above 0.9. Figure 3 gives the absorbance of iron (II) sulfate at concentrations of 1 - 10 mg mL⁻¹ (A) and 0.2 -1 mg mL⁻¹ (B).

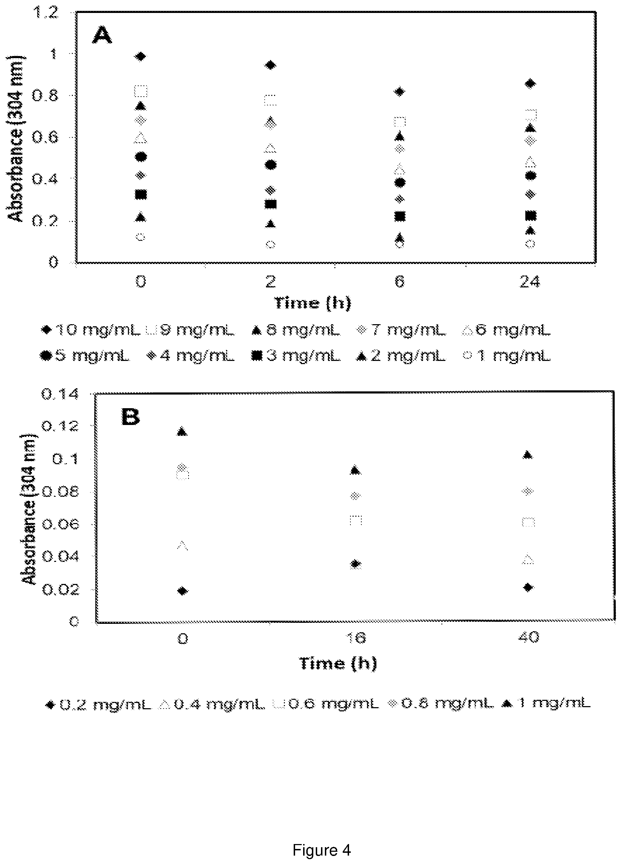

Depending on the color change, absorbance values can be stable up to 40 hours. Figure 4 gives the absorbance values of the color change based on iron (II) sulfate heptahydrate - Catal's reagent reaction at 304 nm based on time.

The characteristics and characterization of the synthesized 1-(Dodecylthio)anthracene-9,10-dione molecule are given below.
Efficiency: 0,81 g (%48).
R_{f} (Chloroform) : 0,49.
FT-IR (cm⁻¹):
   v = 2960, 2915, 2846 (C-Hₐᵣₒₘ), 1567 (C=C), 1666 (C=O).
   UV-vis(Acetonitrile): λₘₐₓ (logε) = 3,91 (436 nm), 4,14 (304 nm), 4,54 (266 nm), 4,66 (253 nm), 4,73 (233 nm).
   ¹H NMR (499,74 MHz, CDCl₃): δ= 0,81-0,83 (m, 3H, CH₃), 11,17-1,19 (m, 2H, CH2), 1,52-1,55 (m, 2H, SCH₂CH₂), 2,28-2,32 (m, 2H, SCH₂CH₂), 7,18-8,25 (m, 7H, Hₐᵣₒₘ).
   ¹³C NMR (125,66 MHz, CDCl₃): δ= 12,24, 132,20, 132,46, 132,52, 133,08, 133,14, 133,64, 135,70, 136,69 (Cₐᵣₒₘ and CHₐᵣₒₘ), 182,09 (C=O).
   MS [+ESI]: m/z = 409,15 [M+H]⁺, [M-Dodecanthiol]⁺241
   C₂₆H₃₂O₂S, (M, 408,60 g/mol).

The characteristic C = O band was observed in the FT-IR spectrum at 1666 cm⁻¹. The carbonyl carbon in the anthraquinone skeleton was seen at 182.09 ppm in ¹³C NMR. In the mass spectrum of the new anthraquinone analog, the molecular ion peak was confirmed as m/z = 409.15 [M + H]⁺. The ion fragment was observed at m/z = 241 [M-Dodecanethiol]⁺.

### REFERENCES

A. Choodum,W. Sriprom, W. Wongniramaikul, Portable and selective colorimetric film and digital image colorimetry for detection of iron, Spectrochimica Acta Part A: Molecular and Biomolecular Spectroscopy 208 (2019) 40-47, https://doi.org/10.1016/j.saa.2018.09.062.
A. Solana-Altabella, M.H. Sanchez-Iranzo, J.I. Bueso-Bordils, L. Lahuerta-Zamora, A.M. Mellado-Romero, Computer vision-based analytical chemistry applied to determining ironin commercial pharmaceutical formulations, Talanta 188 (2018) 349-355, https://org/10.1016/j.talanta.2018.06.008.
A.F. João, A.L. Squissato, G.M.Fernandes, R.M. Cardoso, A.D. Batista, R.A.A.Muñoz, Iron (III) determination in bioethanol fuel using a smartphone-based device, Microchem. J. 146 (2019) 1134-1139, https://doi.org/10.1016/j.microc.2019.02.053.
A.S. Amin, A.A. Gouda,Utility of solid-phase spectrophotometry for determination of dissolved iron(II) and iron(III) using 2,3-dichloro-6-(3-carboxy-2-hydroxy-1-naphthylazo)quinoxaline, Talanta 76 (2008) 1241-1245, https://doi.org/10.1016/j.talanta.2008.05.034
D.C. Goswami, H. Kalita, Rapid determination of iron in water by modified thiocyanate method, Def. Sci J, 38 (1988) 177-182, https://doi.org/10.14429/dsj.38.4835.
E. M. Perchellet, M. J. Magill, X. Huang, D. M. Dalke, D. H. Hua & J. P. Perchellet, 1, 4-Anthraquinone: an anticancer drug that blocks nucleoside transport, inhibits macromolecule synthesis, induces DNA fragmentation, and decreases the growth and viability of L1210 leukemic cells in the same nanomolar range as daunorubicin in vitro, Anti-Cancer Drugs, 11(5) (2000) 339-352
F. Ozkok, Y. M. 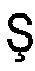 ahin, Biyoaktif Antrakinon Anologlarinin Sentezine Yönelik Özgün Metot Geli 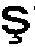 tirilmesi, TÜRKIYE, Patent, TR 2016/19610
J. W. Lown, Anthracycline and anthraquinone anticancer agents: Current status and recent developments, Chem Soc Rev. 22 (1993) 165, https://doi.org/10.1016/0163-7258(93)90006-Y L.L. Stookey. Ferrozine---A new spectrophotometric reagent for iron, Anal. Chem. 42 (1970) 779-81, https://org/10.1021/ac60289a016.
L.S.G. Teixeira, F.R.P.Rocha, A green analytical procedure for sensitive and selective determination of iron in water samples by flow-injection solid-phase spectrophotometry, Talanta 71 (2007) 1507-1511, https://doi.org/10.1016/j.talanta.2006.07.025.
L.W. Hsin, H. P. Wang, P. H. Kao, O. Lee, H. W. Chen, J. H. Guh, Y. L. Chan, C. P. His, M. S. Yang, T. K. Li, C. H. Lee, Synthesis, DNA binding, and cytotoxicity of 1,4-bis(2-aminoethylamino)anthraquinone-amino acid conjugates, Bioorg Med Chem. 16 (2008) 1006, https://doi.org/10.1016/j.bmc.2007.10.012
M. Balcerzak, A. Tyburska, E. Swiecicka-Füchsel, Selective determination of Fe(lll) in Fe(ll) samples by UV-spectrophotometry with the aid of quercetin and morin, Acta Pharm. 58 (2008) 327-34, https://org/10.2478/v10007-008-0013-4.
M.J. Verschoor, L.A. Molot, A comparison of three colorimetric methods of ferrous and total reactive iron measurement in freshwaters, Limnol. Oceanogr. Methods 11 (2013) 113-125, https://doi.org/10.4319/Iom.2013.11.113.
N. Abu, M. N. Akhtar, W. Y. Ho, S. K. Yeap & N. B. Alitheen, 3-Bromo-1-hydroxy-9, 10-anthraquinone (BHAQ) inhibits growth and migration of the human breast cancer cell lines MCF-7 and MDA-MB231, Molecules, 18(9) (2013) 10367-10377, https://doi.org/10.3390/molecules180910367
P. Carter, Spectrophotometric determination of serum iron at the submicrogram level with a new reagent (ferrozine), Anal. Biochem. 40, (1971) 450-458, https://doi.org/10.1016/0003-2697(71)90405-2.
R. K. Goel, G. G. Das, S. N. Ram, & V. B. Pandey, Antiulcerogenic and anti-inflammatory effects of emodin, isolated from Rhamnus triquerta Wall, Indian Journal of Experimental Biology, 29(3) (1991) 230-232 (PMID:1874536)
S. K. Agarwal, S. S. Singh, S. Verma, & S. Kumar, Antifungal activity of anthraquinone derivatives from Rheum emodi, Journal of Ethnopharmacology, 72(1) (2000) 43-46, https://doi.org/10.1016/S0378-8741(00)00195-1
T. P. A. Devasagayam, A. R. Sundquist, P. Di Mascio, S. Kaiser, H. Sies, Activity of thiols as singlet molecular oxygen quenchers, , Journal of Photochemistry 9(1) (1991) 105-116_*and* Photobiology B: Biology, https://doi.org/10.1016/1011-1344(91)80008-6
T. Peter, T.J. Giovanniello, L. Apt, J.F. Ross, A simple improved method for the determination of serum iron II, J. Lab. Clin. Med. 48 (1956) 280-88
X. Gu, T. Zhou, Determination of Iron (II) in water by a spectrophotometric method after preconcentration on an organic solvent-soluble membrane filter, J. Anal. Lett. 29 (1996) 463-476, https://doi.org/10.1080/00032719608000411.

## Claims

1. A method of producing a reagent comprising the steps of:
**i.** mixing 1-Cloro anthraquinone and ethylene glycol,
**ii.** adding 1-Dodecanethiol to mixed 1-Chloro anthraquinone and ethylene glycol,
**iii.** adding aqueous potassium hydroxide solution to the mixture of (ii) process step and obtaining 1-(Dodecylthio)anthracene-9,10-dione molecule with reflux,
**iv.** purifying of obtained 1-(Dodecylthio)anthracene-9,10-dione molecule, **characterized by comprising;**
**v.** mixing the purified 1-(Dodecylthio)anthracene-9,10-dione molecule by adding into it an organic solvent,
**vi.** obtaining the solution by diluting hydrogen peroxide with distilled water,
**vii.** preparing iron (II) sulphate distilled water solution,
**viii.** mixing the solution prepared in (v) process step and the solution prepared in (vii) process step,
**ix.** mixing the solution prepared in (viii) process step and the solution prepared in (vi) process step,
**x.** adding stabilizer to the solution obtained in (ix) process step.

2. A method of producing a reagent according to Claim 1; **characterized by comprising;** the process of adding a solution of trisodium citrate dihydrate as said stabilizer.

3. A method of producing a reagent according to Claim 1 or 2; **characterized in that;** 1-(Dodecylthio)anthracene-9,10-dione synthesis reaction is performed at a temperature of 110°C to 120°C.

4. A method of producing a reagent according to Claim 1 or 2; **characterized by comprising;** extracting the synthesized 1-(Dodecylthio)anthracene-9,10-dione molecule with chloroform.

5. A method of producing a reagent according to Claim 1, **characterized by comprising;** said purifying process is made by colon chromatography.

6. A method of producing a reagent according to Claim 1, **characterized by comprising;** acetonitrile is used as said organic solvent.

7. A method of producing a reagent according to Claim 1, **characterized by comprising;** the process step of measuring the absorbance of the solution obtained in (x) process step at 304 nm.

8. A reagent for using in the determination of iron (II) sulphate, **characterized by comprising;** 1-(Dodecylthio)anthracene-9,10-dione molecule solved in a solvent.

9. A reagent according to Claim 8, **characterized by comprising;** said solvent is an organic solvent.

10. A reagent according to Claim 8, **characterized by comprising;** said solvent is acetonitrile or another solvent.

11. A kit for using in the determination of iron (II) sulphate, **characterized by comprising;**
• a solution obtained by adding organic solvent to 1-(Dodecylthio)anthracene-9,10-dione molecule,
• a solution obtained by diluting the hydrogen peroxide with distilled water,
• a solution of trisodium citrate dihydrate, and iron (II) sulphate in distilled water.

## Patentansprüche

1. Verfahren zur Herstellung eines Reagens, das die folgenden Schritte umfasst:
**i.** Mischen von 1-Chloranthrachinon und Ethylenglykol,
**ii.** Zugabe von 1-Dodecanethiol zu einer Mischung aus 1-Chloranthrachinon und Ethylenglykol,
**iii.** Zugabe von wässriger Kaliumhydroxidlösung zum Gemisch aus (ii) und Gewinnung des 1-(Dodecylthio)anthracen-9,10-dion-Moleküls unter Rückfluss,
**iv.** Reinigung des erhaltenen 1-(Dodecylthio)anthracen-9,10-dion-Moleküls, **dadurch gekennzeichnet, dass** es umfasst;
**v.** Mischen des gereinigten 1-(Dodecylthio)anthracen-9,10-dion-Moleküls durch Zugabe eines organischen Lösungsmittels,
**vi.** Gewinnung der Lösung durch Verdünnen von Wasserstoffperoxid mit destilliertem Wasser,
**vii.** Herstellung einer destillierten Eisen(II)-sulfatlösung,
**viii.** Mischen der in Prozessschritt (v) hergestellten Lösung und der in Prozessschritt (vii) hergestellten Lösung,
**ix.** Mischen der in Verfahrensschritt (viii) hergestellten Lösung und der in Verfahrensschritt (vi) hergestellten Lösung,
**x.** Zugabe von Stabilisator zu der in Verfahrensschritt (ix) erhaltenen Lösung.

2. Verfahren zur Herstellung eines Reagens nach Anspruch 1, **dadurch gekennzeichnet, dass** es das Verfahren der Zugabe einer Lösung von Trinatriumcitratdihydrat als Stabilisator umfasst.

3. Verfahren zur Herstellung eines Reagens nach Anspruch 1 oder 2, **dadurch gekennzeichnet, dass** die 1-(Dodecylthio)anthracen-9,10-dion-Synthesereaktion bei einer Temperatur von 110 °C bis 120 °C durchgeführt wird.

4. Verfahren zur Herstellung eines Reagens nach Anspruch 1 oder 2, **dadurch gekennzeichnet, dass** es die Extraktion des synthetisierten 1-(Dodecylthio)anthracen-9,10-dion-Moleküls mit Chloroform umfasst.

5. Verfahren zur Herstellung eines Reagens nach Anspruch 1, **dadurch gekennzeichnet, dass** das Reinigungsverfahren durch Kolonchromatographie durchgeführt wird.

6. Verfahren zur Herstellung eines Reagens nach Anspruch 1, **dadurch gekennzeichnet, dass** Acetonitril als das organische Lösungsmittel verwendet wird.

7. Verfahren zur Herstellung eines Reagens nach Anspruch 1, **dadurch gekennzeichnet, dass** es den Verfahrensschritt des Messens der Absorption der im Verfahrensschritt (x) erhaltenen Lösung bei 304 nm umfasst.

8. Reagens zur Verwendung bei der Bestimmung von Eisen(II)sulfat, **dadurch gekennzeichnet, dass** es ein 1-(Dodecylthio)anthracen-9,10-dion-Molekül, gelöst in einem Lösungsmittel, umfasst.

9. Reagens nach Anspruch 8, **dadurch gekennzeichnet, dass** das Lösungsmittel ein organisches Lösungsmittel ist.

10. Reagenz nach Anspruch 8, **dadurch gekennzeichnet, dass** es sich bei dem Lösungsmittel um Acetonitril oder ein anderes Lösungsmittel handelt.

11. Kit zur Verwendung bei der Bestimmung von Eisen(II)-sulfat, **dadurch gekennzeichnet, dass** es umfasst;
• eine Lösung, die durch Zugabe eines organischen Lösungsmittels zu einem 1-(Dodecylthio)anthracen-9,10-dion-Molekül erhalten wird,
• eine durch Verdünnen des Wasserstoffperoxids mit destilliertem Wasser erhaltene Lösung,
• eine Lösung von Trinatriumcitrat-Dihydrat und Eisen(II)-sulfat in destilliertem Wasser.

## Revendications

1. Procédé de production d'un réactif comprenant les étapes suivantes :
**i.** mélange de la 1-Cloro anthraquinone et de l'éthylène glycol,
**ii.** ajout de 1-Dodécanethiol à un mélange de 1-Chloro anthraquinone et d'éthylène glycol,
**iii.** ajout d'une solution aqueuse d'hydroxyde de potassium au mélange de (ii) l'étape de procédé et obtention d'une molécule de 1-(Dodécylthio) anthracène-9,10-dione avec reflux,
**iv.** purification de la molécule de 1-(Dodécylthio)anthracène-9,10-dione obtenue, **caractérisée en ce qu'**elle comprend :
**v.** mélange de la molécule purifiée de 1-(Dodécylthio)anthracène-9,10-dione en y ajoutant un solvant organique,
**vi.** obtention de la solution en diluant le peroxyde d'hydrogène avec de l'eau distillée,
**vii.** préparation de la solution d'eau distillée de sulfate de fer (II),
**viii.** mélange de la solution préparée à l'étape (v) du procédé et la solution préparée à l'étape (vii) du procédé,
**ix.** mélange de la solution préparée à l'étape (viii) du procédé et la solution préparée à l'étape (vi) du procédé,
**x.** ajout de stabilisant à la solution obtenue dans l'étape (ix) du procédé.

2. Procédé de production d'un réactif selon la revendication 1; **caractérisé en ce qu'**il comprend: le processus d'ajout d'une solution de citrate trisodique dihydraté comme ledit stabilisant.

3. Procédé de production d'un réactif selon la revendication 1 ou 2; **caractérisé en ce que**: la réaction de synthèse de la 1-(Dodécylthio) anthracène-9,10-dione est réalisée à une température de 110 °C à 120 °C.

4. Procédé de production d'un réactif selon la revendication 1 ou 2; **caractérisé en ce qu'**il comprend : l'extraction de la molécule synthétisée de 1-(Dodécylthio) anthracène-9,10-dione avec du chloroforme.

5. Procédé de production d'un réactif selon la revendication 1, **caractérisé en ce qu'**il comprend: ledit processus de purification étant effectué par chromatographie du côlon.

6. Procédé de production d'un réactif selon la revendication 1, **caractérisé en ce qu'**il comprend: l'acétonitrile étant utilisé comme ledit solvant organique.

7. Procédé de production d'un réactif selon la revendication 1, **caractérisé en ce qu'**il comprend: l'étape de processus consistant à mesurer l'absorbance de la solution obtenue dans l'étape de processus (x) à 304 nm.

8. Réactif à utiliser dans la détermination du sulfate de fer (II), **caractérisé en ce qu'**il comprend: la molécule de 1-(Dodécylthio)anthracène-9,10-dione résolue dans un solvant.

9. Réactif selon la revendication 8, **caractérisé en ce qu'**il comprend: ledit solvant étant un solvant organique.

10. Réactif selon la revendication 8, **caractérisé en ce qu'**il comprend: ledit solvant étant l'acétonitrile ou un autre solvant.

11. Kit à utiliser dans la détermination du sulfate de fer (II), **caractérisé en ce qu'**il comprend:
• une solution obtenue en ajoutant un solvant organique à une molécule de 1-(Dodécylthio)anthracène-9,10-dione,
• une solution obtenue en diluant le peroxyde d'hydrogène avec de l'eau distillée,
• une solution de citrate trisodique dihydraté et de sulfate de fer (II) dans de l'eau distillée.
